# EUROPEAN PATENT SPECIFICATION

(11) **EP 2 984 900 B1**
(45) Date of publication and mention of the grant of the patent: **08.03.2017**
(21) Application number: 13882007.1
(22) Date of filing: 04.09.2013
(51) Int. Cl.: H04W 76/04, H04W 52/02, H04W 56/00

(54) **SYSTEM FRAME NUMBER SYNCHRONIZATION**
SYNCHRONISATION VON SYSTEMRAHMENNUMMERN
SYNCHRONISATION DE NUMÉROS DE TRAME SYSTÈME

(30) Priority: 12.04.2013 US 201361811143 P
(43) Date of publication of application: 17.02.2016
(73) Proprietor: Telefonaktiebolaget LM Ericsson (publ), 164 83 Stockholm (SE)
(72) Inventor: TIRRONEN, Tuomas, FI-00950 Helsinki (FI); MÜLLER, Walter, S-194 62 Upplands Väsby (SE); YAVUZ, Emre, S-113 45 Stockholm (SE); LARMO, Anna, FI-02600 Espoo (FI)
(74) Representative: Ericsson
(86) International application number: PCT/SE2013/051030
(87) International publication number: WO 2014/168537

(56) References cited:
- EP-A2- 1 903 814
- WO-A1-2008/027915
- WO-A1-2013/169376
- GB-A- 2 483 752
- US-A- 6 088 602
- US-A1- 2011 190 019
- US-A1- 2013 070 582

## Description

### TECHNICAL FIELD

Embodiments herein relate to wireless communication systems, such as telecommunication systems. In particular, embodiments herein relate to M2M communication between wireless devices.

### BACKGROUND

In general, power consumption is of great importance in modern communication applications. Machine-to-Machine, M2M, communications, for example, is an increasingly popular paradigm and M2M traffic and devices are envisioned to grow to a large extent in the near future. For this type of communications different optimizations to current technologies are needed depending on the use case. One goal is to ensure that low power consumption is possible by avoiding extensive or unnecessary signalling and keeping the device in low-power state for long periods (i.e., have as few transmission and reception events as possible). In a typical implementation of a device, once there is no need to receive or transmit data, the device can switch to a deep sleep state in which its circuitry is turned off as much as possible. In the deep sleep, the power consumption is a fraction of the power consumption in active transmission/reception state. However, in order to be able to wake up at a certain time the device need to have a, preferably low power, clock. As such a low power clock would be inaccurate, i.e. there is a risk of slipping in time and frequency during the deep sleep period.

To save power in cellular systems, User Equipment, UE may for example be configured with the Discontinuous Reception, DRX, mechanism. This means the UE does not need to continuously keep its receiver circuitry on and listen to downlink traffic, and thus can save power by turning parts of its hardware (i.e., go into a sleeping state) when there is no data to be received.

The UEs keep track of time with respect to networks by monitoring System Frame Numbers, SFN. In LTE, SFN identifies radio frames, which are divided into 10 subframes, each with duration of 1 ms, making the length of radio frames 10 ms each. SFN information in LTE system is broadcasted in the Master Information Block, MIB, which is sent every 40 ms and repeated on 10 ms intervals during the 40 ms period. The UE can deduce the correct SFN by successfully decoding one such MIB transmission.

Based on the SFN the UE calculates, for example, the timing of the DRX mechanism. Using SFN the UE knows when it should wake-up and listen to downlink paging (or other control information).

The UE hardware typically includes at least two different clock mechanisms. One clock is an accurate clock and is used to keep correct synchronization with the network. The other clock is a low-power clock, which can keep rough timing and is always on.

The current range of SFNs in LTE is from 0 to 1023. As the length of a single frame is 10 ms, this gives a SFN range of 10.24 s. The SFN thus wraps-around every 10.24 seconds, and starts a new SFN cycle. The longer the DRX cycle becomes, the more difficult it becomes for the UE to wake up from a deep sleep-state, in which the accurate clock is turned off, to receive DL information in the form of paging on normal DL allocation from the network at the correct time instance. Furthermore, if the DRX cycle would exceed the SFN, the UE could not be sure whether it had woken up in the correct SFN cycle, as the SFN would possibly wrapped around more than once.

For WCDMA systems the corresponding time wraps around every 40.96 seconds.

Known prior art, as in for example US Application no. 20110269434, "Method and apparatus for timestamping uplink messages", includes a method for using system information for broadcasting global time, having wraparound larger than the SFN for the network, using one radio access technology to deduce the timing in a second radio access technology used by the network. This is how in current LTE systems the UE may be informed of the current time in CDMA system.

There is thus a general need for a robust and efficient way of managing a sleep state of a wireless device, such as a UE, in a wireless communication network.

EP 1 903 814 A2 relates to a method for performing a Discontinuous Reception, DRX, operation by a connected mode UE in a mobile communication system. The method includes waking up at a wake-up timing, and determining whether an incoming data indication is received from a Node B, reestablishing uplink synchronization upon receipt of the incoming data indication, and waking up after sleeping for a time from the incoming data indication reception timing, receiving a transmission resource allocation message from the Node B, and receiving downlink data over allocated transmission resources.

US 2011/190019 A1 relates to an apparatus and a method for managing s system frame number, SFN, in a wireless communication system. A base station allocates information about the SFN to a physical downlink control channel, PDCCH, and transmits the PDCCH, and a mobile terminal reads the PDCCH at each discontinuous DRX cycle to inspect whether the mobile terminal received a paging message, and determines whether an SFN of the mobile terminal is identical to an SFN of the base station using the information about the SFN included in the PDCCH, thereby solving a difference in SFN.

### SUMMARY

It is an object to provide a robust and efficient method for managing a sleep state of a wireless device.

It is also an object to provide a corresponding wireless device.

These and other objects are met by embodiments of the proposed technology.

According to a first aspect, there is provided a method performed by a wireless device for managing a sleep state when a Discontinuous Reception, DRX, cycle of the wireless device is configured to be longer than a predefined value. The method comprises the following steps:
▪ determining a future point in time indicating an upcoming, future reception occasion at which the wireless device will receive a message;
▪ entering the sleep state;
▪ keeping track of time during the sleep state according to a first time format by using a clock;
▪ waking-up from the sleep state before, as monitored by the clock, the future point in time;
▪ reading broadcasted time information according to a second time format;
▪ obtaining System Frame Number, SFN, synchronization based on the broadcasted time information according to the second time format and received System Frame Number, SFN, information;
▪ receiving, with obtained SFN synchronization, the message at the future point in time.

According to a second aspect, there is provided a wireless device configured for managing a sleep state when a Discontinuous Reception, DRX, cycle is configured to be longer than a predefined value. The wireless device comprises:
- a processing circuit configured to:
   ▪ determine a future point in time indicating an upcoming, future reception occasion at which the wireless device will receive a message;
   ▪ cause the wireless device to enter the sleep state;
   ▪ operate a clock for keeping track of time during the sleep state according to a first time format;
   ▪ wake up the wireless device from the sleep state before, as monitored by the clock, the future point in time;
   ▪ read broadcasted time information according to a second time format;
   ▪ obtain System Frame Number, SFN, synchronization based on the broadcasted time information according to the second time format and received System Frame Number, SFN, information; and
- a receiver configured to receive, with obtained SFN synchronization, the message at the future point in time.

According to a third aspect, there is provided a wireless device comprising:
▪ a determining module for determining a future point in time indicating an upcoming, future reception occasion at which the wireless device will receive a message;
▪ a sleep module for causing the wireless device to enter a sleep state;
▪ a time keeping module for keeping track of time during the sleep state according to a first time format by using a clock;
▪ a wake-up module for waking-up the wireless device from the sleep state before the future point in time;
▪ a reading module for reading broadcasted time information according to a second time format; and
▪ a System Frame Number, SFN, synchronization module for obtaining SFN synchronization based on the broadcasted time information according to the second time format and received System Frame Number, SFN, information.

According to a fourth aspect, there is provided a method in a wireless device for managing a sleep state when a DRX cycle of the wireless device is configured to be longer than a predefined value, and the wireless device comprises a first clock for keeping track of time according to a first time format. The method comprises the following steps:
▪ the wireless device reading a first value from a second time format;
▪ the wireless device determining a first point in time indicating an upcoming, or future, reception occasion at which the wireless device may receive a first message;
▪ the wireless device entering the sleep state;
▪ the wireless device reading, at a second point in time before the first point in time, a second value from the second time format;
▪ the wireless device calibrating the first clock based on the first and second value;
▪ the wireless device calculating, after calibrating the first clock, the first point in time;
▪ the wireless receiving and reading the first message at the first point in time.

In this way, it is possible to keep the wireless device SFN synchronized even though the DRX cycle is extended beyond what is currently specified in the radio communication standards, e.g. beyond the SFN range.

In particular, this allows the power consumption of the wireless device to be reduced by using extended DRX cycles, while still operating the wireless device to wake up in an accurate manner in view of a future reception occasion.

The wireless device will thus be able to wake-up well before any agreed reception time, with only a rough clock mechanism keeping time, and correctly receive the intended message.

Other advantages will be appreciated when reading the detailed description.

### BRIEF DESCRIPTION OF THE DRAWINGS

The various aspects of embodiments disclosed herein, including particular features and advantages thereof, will be readily understood from the following detailed description and the accompanying drawings, in which:
Figure 1 is a schematic diagram showing a schematic overview of an exemplifying cellular radio communication system in which exemplifying methods according embodiments herein may be implemented.
Figure 2 is a schematic flow diagram illustrating an example of a method for performed by a wireless device for managing a sleep state according to an embodiment.
Figure 3 is a schematic timing diagram illustrating an example of the timing of actions performed by a wireless device according to an embodiment.
Figure 4 is a schematic flow diagram illustrating an example of a method in a wireless device for managing a sleep state according to a related embodiment.
Figure 5 is a schematic flowchart illustrating an example embodiment.
Figure 6 is a schematic block diagram illustrating an example of a wireless device configured for managing a sleep state according to an embodiment.
Figure 7 is a schematic block diagram illustrating an exemplifying wireless device according to another embodiment.
Figure 8A is a schematic block diagram illustrating an example of a wireless device comprising a processing circuit and an associated memory.
Figure 8B is a schematic block diagram illustrating an example of a wireless device comprising a group of function modules.

### DETAILED DESCRIPTION

Throughout the following description similar reference numerals have been used to denote similar elements, network nodes, parts, items or features, when applicable.

For a better understanding of the proposed technology, it may be useful to begin with a brief overview of an exemplifying radio communications system.

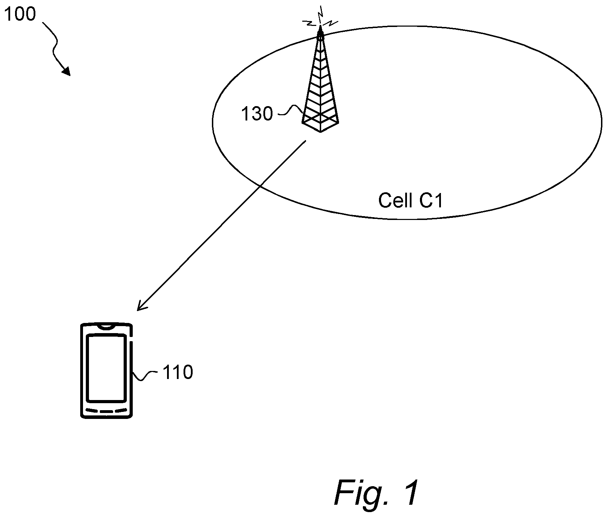

Figure 1 depicts an exemplifying radio communications system 100 in which embodiments herein may be implemented. In this example, the radio communications system 100 is an Long Term Evolution, LTE, system. In other examples, the radio communication system may be any Third Generation Partnership Project, 3GPP, cellular communication system, such as a Wideband Code Division Multiple Access, WCDMA, network, a Global System for Mobile communication, GSM, network, an evolution of any one of the above mentioned systems or the like.

The radio communication system 100 comprises a radio network node 130. As used herein, the term "radio network node" may refer to an evolved Node B, eNB, a control node controlling one or more Remote Radio Units, RRUs, a radio base station, an access point or the like. The radio network node 130 may be configured to operate over a so called system bandwidth. A portion of the system bandwidth may be reserved, statically or dynamically, for Device-to-Device, D2D, communication.

The radio network node 130 may operate a cell C1. More generally, the cell C1 may be comprised in the radio communication system 100.

Furthermore, a wireless device 110 may be located in the cell C1. As used herein, the term "wireless device" may refer to a user equipment, UE, a mobile phone, a cellular phone, a Personal Digital Assistant, PDA, equipped with radio communication capabilities, a smartphone, a laptop or personal computer, PC, equipped with an internal or external mobile broadband modem, a tablet PC with radio communication capabilities, a portable electronic radio communication device, a sensor device equipped with radio communication capabilities or the like. The sensor may be any kind of weather sensor, such as wind, temperature, air pressure, humidity etc. As further examples, the sensor may be a light sensor, an electronic switch, a microphone, a loudspeaker, a camera sensor etc.

The wireless device 110 comprises a first clock, such as a low power clock, and normally also a second clock that is more accurate than the first clock. The first clock is an always-on clock for keeping rough time, which consumes very little power, whereas the second clock is a fine clock which consumes more power, but not used during sleep state. Upon wake-up, the second fine clock is synchronized to system frame and symbol boundaries by reading a synchronization signal in the system information. This is not directly related to the SFN synchronization, but rather an additional level of synchronization for receiving or transmitting any message.

In some telecommunications systems (for example LTE, GSM, WCDMA) it is currently not possible to have a time reference in the future at an arbitrary point in such a way that the UE would wake-up, or perform other actions if it has been in a deep sleep state with only a rough clock mechanism keeping time.

Thus, there is no solution to keep the UE SFN synchronized if the long DRX cycle is extended and still be certain that the UE always wakes up in the correct SFN. This limits the usable DRX cycle values to be shorter than the SFN range. Also for DRX cycles within SFN wrap-around the UE need to wake up well before the agreed DL reception time with eNB and with enough time margin to cater for the worst case internal low power clock accuracy. This will limit the battery saving efficiency for long DRX cycles.

To be able to extend idle and connected mode DRX cycles beyond what is currently specified and use the extended sleeping cycles efficiently, it is desirable to provide a mechanism to relate the absolute time and the system radio frame number (e.g. SFN in LTE).

Therefore, it is desirable to further reduce power consumption in a wireless device. In particular, it may be beneficial to reduce power consumption in a wireless device by means of using extended DRX cycles and still operating the wireless device such as to wake up in an accurate manner in view of for example a potential page message.

Extending the idle and connected mode DRX cycles to be longer than what is currently specified can reduce UE power consumption significantly which is one of the requirements for the emerging M2M communication scenarios. For example, when using longer connected mode DRX and/or paging cycles than available today for LTE (2.56 s maximum) or HSPA (5.12 s maximum), the UE may not be able to keep track of the correct timing and synchronization to current system frame number (SFN). This is especially likely if the UE turns off its accurate clock to save energy while sleeping. This would mean that the UE may not know when to wake up exactly to receive the downlink (DL) information from the network, as the calculation of the paging occasion (subframe in LTE) is based on correct timing synchronization and the SFN. Even if the UE may use SFN in system information as a reference to be in sync with the network, this would only work in case the sleeping cycle does not exceed the SFN range (10.24 s in LTE, 40.96 s in HSPA/WCDMA systems).

As outlined in the background section, there is thus a general need for a robust and efficient way of managing a sleep state of a wireless device, such as a UE, in a wireless communication network.

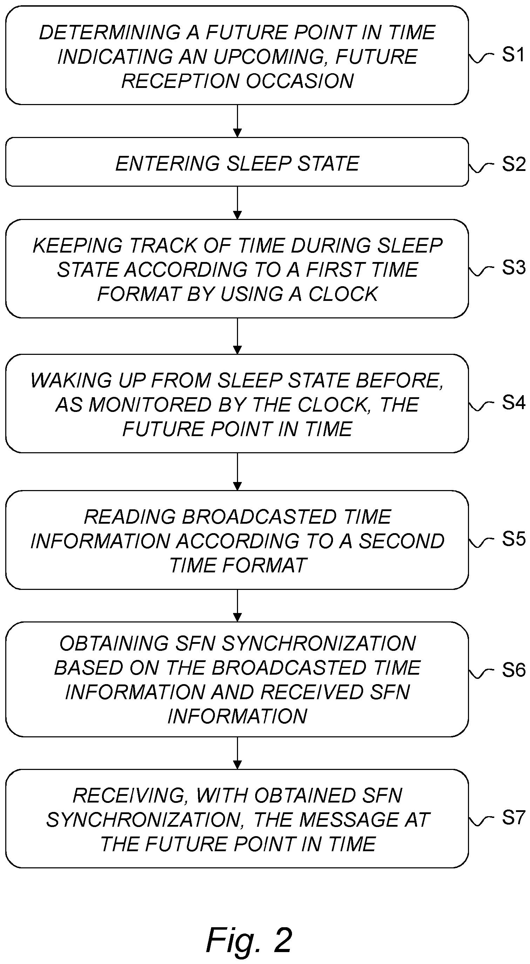

Figure 2 is a schematic flow diagram illustrating an example of a method for performed by a wireless device for managing a sleep state according to an embodiment.

The method is performed by a wireless device for managing a sleep state when a Discontinuous Reception, DRX, cycle of the wireless device is configured to be longer than a predefined value.

In step S1, the wireless device is determining a future point in time indicating an upcoming, future reception occasion at which the wireless device will receive a message.

In step S2, the wireless device is entering the sleep state.

In step S3, the wireless device is keeping track of time during the sleep state according to a first time format by using a clock.

In step S4, the wireless device is waking-up from the sleep state before, as monitored by the clock, the future point in time.

In step S5, the wireless device is reading broadcasted time information according to a second time format.

In step S6, the wireless device is obtaining System Frame Number, SFN, synchronization based on the broadcasted time information according to the second time format and received System Frame Number, SFN, information.

In step S7, the wireless device is receiving, with obtained SFN synchronization, the message at the future point in time.

In this way, it is possible to keep the wireless device SFN synchronized even though the DRX cycle is extended beyond what is currently specified in the radio communication standards, e.g. beyond the SFN range.

In particular, this allows the power consumption of the wireless device to be reduced by using extended DRX cycles, while still operating the wireless device such as to wake up in an accurate manner in view of a future reception occasion.

The wireless device will thus be able to wake-up well before any agreed reception time, with only a rough clock mechanism keeping time, and correctly receive the intended message.

It should be understood that the step of obtaining SFN synchronization is normally an active step of using the broadcasted time information according to the second time format and received System Frame Number, SFN, information to establish SFN synchronization.

Normally, the clock is a low-power clock. According to a particular example, the low-power clock is calibrated based on the broadcasted time information according to the second time format to correct for a drift in the low-power clock.

Preferably, the future point in time is referred to using time information according to the second time format and the SFN of the future reception occasion, and the second time format is representative of absolute time.

It should also be understood that it is not necessary to perform all steps every DRX cycle. For example, depending on the expected accuracy of the low-power clock, all steps may be performed only every *N^{th}* cycle, and in the other cycles the broadcasted time information according to a second time format does not have to be read because SFN synchronization can be maintained anyway.

In a particular example, a first value of the time information according to a second time format is read before entering the sleep state, and a second value of the time information according to a second time format is read after waking up from the sleep state.

For example, the predefined value may be a predetermined value according a standard specification of a radio communication system. This means that the DRX cycle is configured to be longer than the predetermined value according the standard specification.

The proposed technology is particularly useful when the predefined value refers to the SFN range. This means that the DRX cycle is configured to be longer than the SFN range. Accordingly, the future point in time lies beyond the SFN range, and SFN synchronization is obtained although the SFN wraps around based not only on received System Frame Number, SFN, information but also on the broadcasted time information according to the second time format.

As an example, the wireless device wakes up from the sleep state when the current time *t* as monitored by the clock is more than *t_{PAGE} - tₛ,* where *t_{PAGE}* is the future point in time indicating an upcoming reception occasion and *tₛ* is a first time period, so that the wireless device wakes up *tₛ* milliseconds before the upcoming reception occasion.

In a further example, the clock is then calibrated based on the broadcasted time information according to the second time format. The wireless device once again enters the sleep state, and then wakes up from the sleep state when the current time *t* as monitored by the clock is more than *t_{PAGE} - t_{SFN},* where *t_{PAGE}* is the future point in time indicating an upcoming reception occasion and *t_{SFN}* is a second time period, so that the wireless device wakes up *t_{SFN}* milliseconds before the upcoming reception occasion, where *tₛ* is greater than or equal to *t_{SFN}.*

By way of example, the broadcasted time information according to the second time format is in the form of Universal Coordinated Time, UTC, or Global Positioning System, GPS, time. Although UTC or GPS time may be particularly useful, it should be understood that the proposed technology is not limited thereto. There may be embodiments in which any suitable reference time may be used.

In a particularly useful embodiment, however, the broadcasted time information according to the second time format is in the form of UTC, and the future point in time is referred to using UTC and SFN.

As mentioned, the wireless device may be a User Equipment, UE, and as will be exemplified later on, the upcoming reception occasion may be a future downlink reception event.

By way of example, the future point in time indicating an upcoming, future reception occasion is calculated by the wireless device or obtained in negotiation with a base station or other network node.

According to a non-limiting example embodiment, the wireless device is a User Equipment, UE, and Universal Coordinated Time, UTC, is read from the system information and used by the UE to select a wake-up time in the future so that extended long DRX cycles can be used and the UE knows when to wake-up. Alternatively, the UE negotiates with an eNB to obtain a wake-up time for the UE to wake-up for downlink reception. The UE then wakes up before this selected or negotiated occasion to obtain correct timing synchronization for its low-power clock, and later wakes up again and receives paging information or other downlink transmission at the correct time.

Currently UEs calculate the paging times based on their ID such as the International Mobile Subscriber Identity, IMSI, and relevant system information. According to a particular example, the UE may thus use such information together with the above UTC time information as a basis for calculating a wake-up time in the future so that extended long DRX cycles can be used.

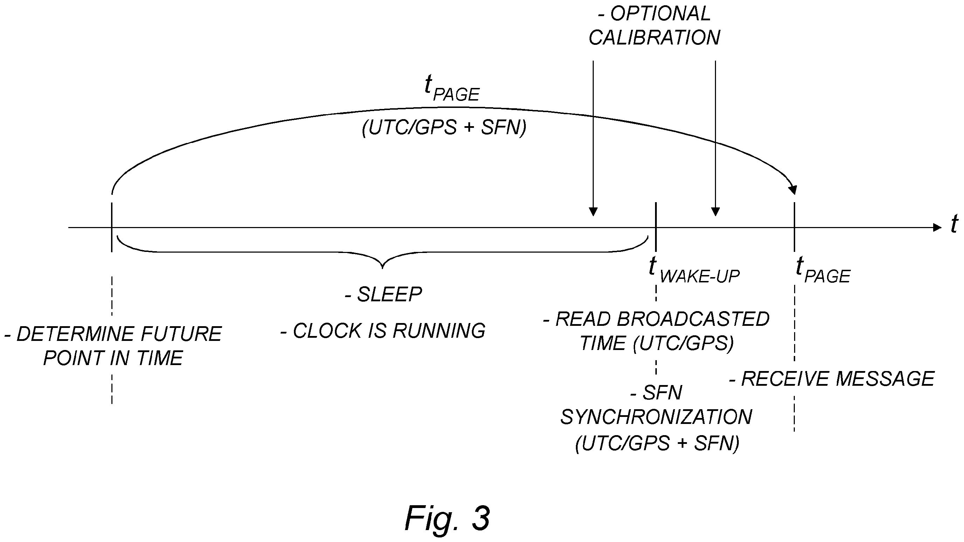

Figure 3 is a schematic timing diagram illustrating an example of the timing of actions performed by a wireless device according to an embodiment.

As can be seen from Figure 3, a future point in time is determined indicating an upcoming, future reception occasion at which the wireless device will receive a message. This future point in time is generally referred to as *t_{PAGE}* and may for example be referred to by means of a combination of absolute time, such as UTC/GPS, and SFN information.

The wireless device then sleeps until a wake-up time *t_{WAKE-UP}*, which is normally determined with consideration to the currently configured the DRX cycle. The wireless device keeps track of time during sleep state by running a clock, such as a low-power clock to reduce power consumption.

The clock may optionally be calibrated at one or more additional occasions to correct for any drift in the low-power clock.

Once the wireless device wakes up from sleep state, it reads broadcasted time information such as UTC/GPS and then obtains or establishes SFN synchronization, using the combination of for example UTC/GPS information and SFN information.

In case the DRX cycle is configured to be longer than the SFN range, and the future point in time lies beyond the SFN range, SFN synchronization can be obtained, i.e. established, although the SFN wraps around by using the broadcasted time information such as UTC/GPS time to determine the correct SFN cycle. Next, once the correct SFN cycle is determined, the received SFN information can be used for normal SFN synchronization within the SFN range to ultimately find the correct radio system frame in which reception will occur.

In a particular example, as mentioned, the future point in time is referred to using time information according to the second time format such as UTC/GPS time and the SFN of the future reception occasion. When the broadcasted time information such as UTC/GPS time is read after wake-up, it is possible to correct for any drift in the low-power clock and correctly interpret the received SFN numbers. The broadcasted time information such as UTC/GPS time can be compared to the UTC/GPS time that defines the future point in time for reception to be able to establish if the reception occasion will occur during the current SFN cycle or an upcoming SFN cycle. Once the correct SFN cycle is determined, the received SFN numbers can be compared to the SFN number of the future reception occasion to find the correct radio system frame in which reception will occur.

With received SFN synchronization, the wireless device can then correctly receive the message at *t_{PAGE}*, as can be seen at the end of the timing diagram of Figure 3.

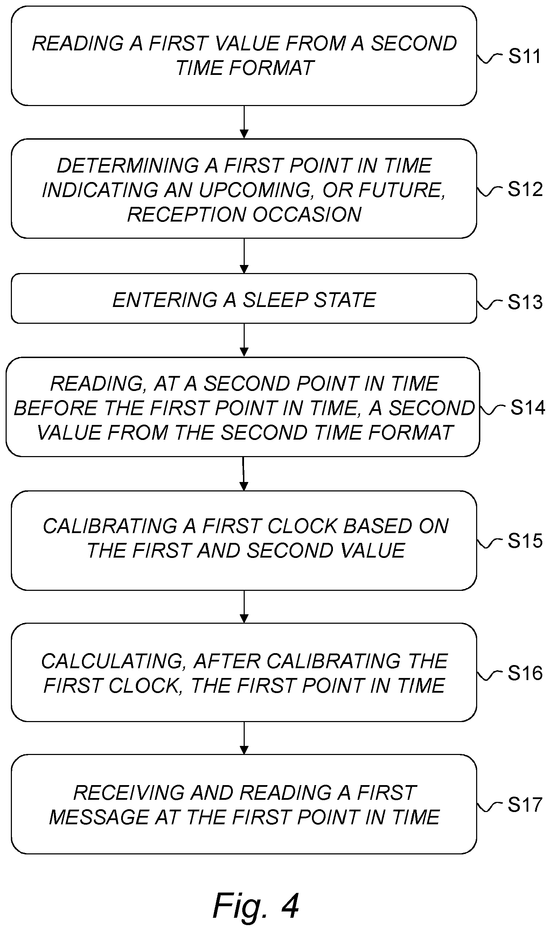

Figure 4 is a schematic flow diagram illustrating an example of a method in a wireless device for managing a sleep state according to a related embodiment.

There is provided a method in a wireless device for managing a sleep state when a DRX cycle of the wireless device is configured to be longer than a predefined value. The predefined value may refer to the SFN range. The wireless device comprises a first clock (a low power clock) for keeping track of time according to a first time format.

In step S11, the wireless device reads a first value from a second time format, such as the UTC information from SIB-16.

In step S12, the wireless device determines a first point in time (*t_{PAGE}*) indicating an upcoming, or future, reception occasion at which the wireless device may receive a first message, such as a page message or a Downlink Control Information message.

In step S13, the wireless device enters a sleep state.

In step S14, at a second point in time (*t_{WAKE}-_{UP}*), before the first point in time (*t_{PAGE}*), the wireless device reads a second value from the second time format.

In step S15, the wireless device calibrates the first clock based on the first and second value.

Next, i.e. after calibrating the first clock, the wireless device calculates, in step S16, the first point in time.

In step S17, at the first point in time, the wireless device receives, and reads, the first message.

In general, the term 'calibration' should be interpreted in a broad sense, and it may include different implementations. Examples include setting the time in an absolute manner by using a global time reference such as UTC time, or using, if the low-power clock is implemented as a counter, the reference time information for comparison to the counter and then calculating an updated time interval representing the remaining time until wake-up and/or the upcoming reception occasion.

In the following, the proposed technology will be described in more detail with reference to non-limiting examples.

In LTE Rel-11, for example, correct Coordinated Universal Time, UTC, can be read from the system information, SI, and it can be used by the UE to select a wake-up time in the future so that extended long DRX cycles can be used and the UE knows when to wake-up, without knowing the exact SFN. Optionally, the UE may negotiate with the eNB to obtain a wake-up time for the UE to wake up for DL reception. The UE can then wake up before this selected or negotiated occasion to obtain correct timing synchronization for its low-power clock and wake up again before the actual paging occasion and receive the paging information (or other DL transmission) at the correct time. In this way, the combination of SFN and UTC, or some other broadcasted time information, can be used to synchronize the UE beyond the SFN range. Thus, embodiments herein uses two time information formats, encoded in a finite number of bits, to obtain synchronization, e.g. in terms of SFN, to the network. One of the time formats gives rough estimation of the correct time instant to wake-up, i.e. the lower power clock or a first clock, while the other one is used to fine tune the synchronization for correct operation.

Optionally, the UE may negotiate with some other network node in the communication network to obtain a wake-up time.

It may be assumed that the UE knows the inaccuracy of its rough clock mechanism, e.g. the always-on clock. Thus, the UE may adjust its operation to wake-up to read the UTC time early enough based on this inaccuracy. For legacy LTE UEs the maximum paging and DRX cycle length is 2.56 seconds so they will operate as specified in LTE Rel-11 (or earlier) and their behaviour is not affected by the implementation of embodiments herein. In fact, the UE behaviour is only impacted when a longer DRX cycle is configured. Similar reasoning and method may be applicable to other systems, like GSM and WCDMA.

Therefore, embodiments herein avoid SFN synchronization problems with extended long DRX while using a further time format, such as the UTC time information, e.g. received over radio interface.

Cellular systems often define multiple states for the terminal matching different transmission activities. In Long Term Evolution, LTE, two states are defined:
- RRC_IDLE, where the terminal is not connected to a particular cell and no data transfer in the uplink may occur. The terminal is in Discontinuous Reception (DRX) most of the time except for occasionally monitoring the paging channel.
- RRC_CONNECTED, where the terminal is connected to a known cell and can receive downlink transmissions. Although expressed differently in the specifications, it can be thought to have two "sub-states":
   ∘ UL_IN_SYNC, where the terminal has a valid timing advance value such that uplink transmissions can be received without collisions between different terminals
   ∘ UL_OUT_OF_SYNC, where the terminal does not have a valid timing advance value and hence cannot transmit data in the uplink. Prior to any transmission, a random access is performed to synchronize the uplink.

The embodiments herein may be applied to when the wireless device 110, or UE, is in RRC_IDLE (idle mode), or in RRC_CONNECTED (connected mode). Therefore, more generally a first message may relate to a paging message at a paging occasion or to control information, such as a Downlink Control Information, DCI, message, or any other message. Consequently, according to the embodiments herein DRX is applicable for the wireless device in both idle and connected mode.

In the following, non-limiting embodiments are described in more detail. The described method enables the UE (and the network) to combine two different time information to obtain correct synchronization at some future time instant. One of the components is the system frame number (SFN), which the UE needs to follow to keep correct frame synchronization to the network. The other time component may e.g. be a calendar time format, such as Universal Coordinated Time (UTC) which can be used to denote a more general or rough time instant in absolute terms. This method makes it possible to use longer DRX cycles than what the length of full SFN range is. The SFN wraps around very often compared to the UTC, or similar, time, thus the combination of these two is needed by the UE to be SFN synchronized to the network at a future time beyond the SFN range.

In LTE Rel-11, as an example, the SIB-16 information element includes the *timeInfoGPS* and *timeInfoUTC* fields which contain the time information (GPS or UTC times) in units of 10 ms corresponding to SFN boundary. Reference is made to TS 36.331 E-UTRA Radio Resource Control (RRC) Protocol Specification (Rel-11).

In another alternative CDMA system time is used in connection with SFN to denote a future time. The CDMA system time information is broadcasted in SIB-8 in LTE systems.

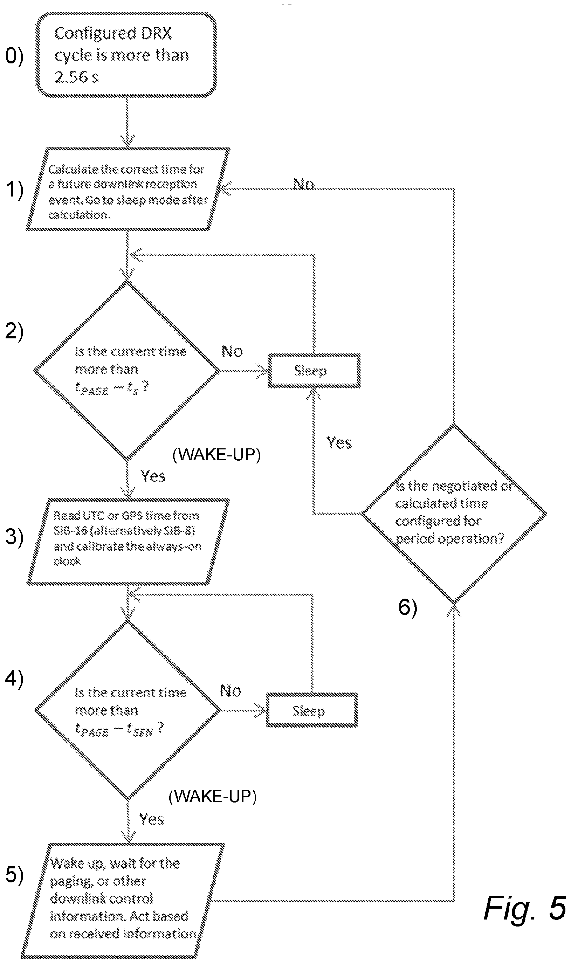

Figure 5 illustrates exemplifying method(s) in the wireless device 110 according to embodiments herein. The wireless device 110 may perform a method for managing a sleep state when the DRX cycle is longer than a predefined value, such as 2,56 s or even beyond a relevant SFN range. The SFN range may, for example, relate to a radio communication system 100 with which the wireless device is able to communicate, e.g. over a radio interface. Figure 5 shows a flow diagram illustrating an exemplifying method to successfully receive paging (or other downlink) information when using long paging and/or DRX cycles in LTE. With technology specific changes, similar procedure could be applicable in other systems as well.

The following actions may be performed in any suitable order.
0) The wireless device is configured to use a DRX cycle longer than 2,56 s, i.e. a predetermined value according a standard specification of the radio communication system 100.
1) The UE, or the wireless device 110, calculates, or determines, e.g. in an initial negotiation phase, a first point in time, such as a correct time t_{PAGE}, for the next DL reception occasion (subframe), including the SFN of the reception event, such as a page message. The correct time t_{PAGE} is related to the DRX cycle length and/or the reception event. The time can be absolute, to be used one time, or alternatively a periodic indication.
   After the negotiation has been performed, the UE may fall into a (deep) sleep state where only the absolutely necessary circuitry is turned on. This circuitry includes a low power clock (a first clock) roughly keeping track of the time. A second clock (an accurate clock), more accurate than the first clock, is turned off. In some examples, the UE also reads the UTC information from SIB-16. The UTC information may be read at some point in time in order to enable calibration of the low power clock. When the low power clock is calibrated a future point in time, such as t_{PAGE} may be referred to using the UTC information + SFN.
   a. Optionally the wake-up time is dictated by the eNB.
   b. Optionally the wake-up time is negotiated between the UE and eNB.
2) The UE wakes up at a second point in time, i.e. *t_s* (same as tₛ*)* milliseconds before the actual intended paging occasion t_{PAGE}. In some examples, this action 2) may be omitted. For example, when drift of the low power clock is small enough, it would suffice to wake up once before the paging (or other downlink information). Maximum *t_s* allowed depends on the hardware implementation of the UE. Moreover, t_s should be small enough to allow the UE to keep the correct synchronization, as will be obtained in action 3 below, until the t_{PAGE} - t_SFN (maximum of one millisecond time drift should be attainable by using *t_s* of less than one minute), i.e during a period of t_s - t_SFN. The t_s is greater than or equal to t_SFN in action 4). When t_s = t_SFN, the actions 2) and 3) may be merged into one action. Hence, the UE wakes up only once as in action 4) before the actual paging occasion. SIB-16 will still have to be read at some time such as in action 1).
3) The UE may read the UTC information from SIB-16 again, so that the always-on and low power clock can be calibrated to correct time. In this action, the UE thus has time information from the low power clock and time information based on UTC (or the like). First time information may refer to time based on the low power clock and second time information may refer to time based on UTC information or the like. In order for the UE to wake up at the wake-up time, or a reasonable time before t_{PAGE}, the UE calibrates the low power clock in accordance with the information based on UTC. As a result, any drift in the lower power clock so far will be corrected for. The UE will now be able to keep, or at least only drift a little, SFN synchronization until at least time t_{PAGE}-t_SFN. If the UE is allowed to drift it may not drift too much such that the paging occasion is missed. In this action, an accurate clock is operated to allow the UE to read for example the UTC information.
   a. Optionally other system information, like SIB-8 for CDMA system time is used.

   The UE may continue sleeping, e.g. enter the sleep state, after this point 3), i.e. amongst other thing the accurate clock is turned off. For example, when t_s = t_SFN the UE does not enter the sleep state here.
4) The UE wakes up again at a third point in time, i.e. *t_SFN* milliseconds before the paging occasion. Maximum *t_SFN* should be equal to or less than the maximum length of one SFN epoch (currently there are 1024 SFN numbers, each corresponding to one 10 ms radio frame, thus the total length with the current system would be 10.24 seconds). t_SFN should be greater than zero. The less the t_SFN is, the greater the probability of missing the paging occasion is.
5) At this point the UE has maintained, at least to some extent, the SFN synchronization, obtained in action 3) or 1), and reads the paging information, if present, at the correct paging frame (e.g. radio frame) and paging occasion (e.g. subframe). Depending on the received paging information the UE performs the required actions as detailed in the LTE specifications. In this action the accurate clock is operated.
6) Before the UE goes back to sleep, it may calculate the next paging occasion as detailed in step 1) or go directly to step 2) if periodic behavior is configured.

If action 2) is omitted, then action 3) would normally also be omitted as well. If t_s = t_SFN, then in a way action 4) could be seen as the omitted step, while action 2) and optionally action 3) are performed directly before action 5).

It is not always necessary to read the broadcasted time according to the second time format (e.g. UTC or GPS time) for SFN synchronization and/or calibration every DRX cycle.

If the UE has information on its internal clock skew, it can negotiate or readjust, in coordination with the eNB or by itself, the actual timer values to ensure best possible performance.

At least some embodiments provides the following advantages:
▪ UTC time makes it possible to have uncertainty on absolute time beyond the SFN range
▪ When using extended long DRX cycles the UE is able to wake up at correct times to receive paging information, when in idle mode, or other downlink control information, when in connected mode.
▪ With this solution there is no need to extend the SFN range just to cater for extended long DRX cycles. This is very beneficial, as the SFN range extension would have impact on the legacy devices, which is not preferred.

It will be appreciated that the methods and devices described above can be combined and re-arranged in a variety of ways.

For example, embodiments may be implemented in hardware, or in software for execution by suitable processing circuitry.

The steps, functions, procedures, modules and/or blocks described above may be implemented in hardware using any conventional technology, such as discrete circuit or integrated circuit technology, including both general-purpose electronic circuitry and application-specific circuitry.

Particular examples include one or more suitably configured digital signal processors and other known electronic circuits, e.g. discrete logic gates interconnected to perform a specialized function, or Application Specific Integrated Circuits, ASICs.

Alternatively, at least some of the steps, functions, procedures, modules and/or blocks described above may be implemented in software such as a computer program for execution by suitable processing circuitry including one or more processors or equivalent processing units.

The flow diagram or diagrams presented above may therefore be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

Examples of processing circuitry includes, but is not limited to, one or more microprocessors, one or more Digital Signal Processors, DSPs, one or more Central Processing Units, CPUs, video acceleration hardware, and/or any suitable programmable logic circuitry such as one or more Field Programmable Gate Arrays, FPGAs or one or more Programmable Logic Controllers, PLCs.

It should also be understood that it may be possible to re-use the general processing capabilities of any conventional device or unit in which the proposed technology is implemented. It may also be possible to re-use existing software, e.g. by reprogramming of the existing software or by adding new software components.

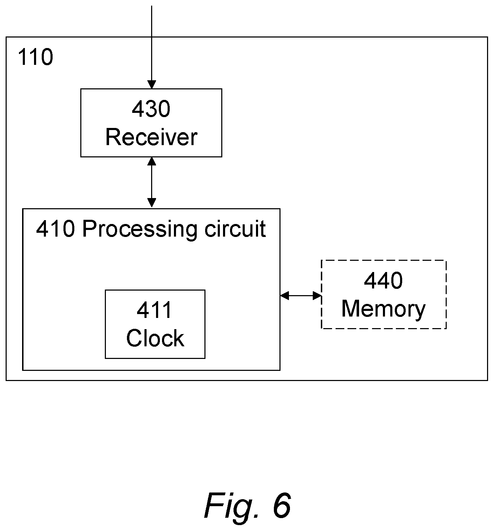

Figure 6 is a schematic block diagram illustrating an example of a wireless device configured for managing a sleep state according to an embodiment. The wireless device 110, such as a UE, basically includes a processing circuit 410 with at least one clock 411, and a receiver 430.

In a hardware implementation of the proposed technology, the processing circuit 410 is implemented directly in hardware using any conventional technology, such as discrete circuit or integrated circuit technology.

Alternatively, the processing circuit 410 interoperates with an associated memory 440, which includes software for execution by the processing circuit 410. In particular, the memory 440 includes program instructions executable by the processing circuit 410, whereby the wireless device 110 and/or the processing circuit 410 is able or operative to execute the above-described steps, functions, procedures, modules and/or blocks. In other words, the wireless device 110 further comprises a memory 440 for storing executable instructions, which when executed by the processing circuit 410 enables the processing circuit 410 to manage the sleep state.

Preferably, the wireless device 110 is configured for managing a sleep state when a Discontinuous Reception, DRX, cycle is configured to be longer than a predefined value.

The processing circuit 410 is configured to:
▪ determine a future point in time indicating an upcoming, future reception occasion at which the wireless device will receive a message;
▪ cause the wireless device to enter the sleep state;
▪ operate the clock 411 for keeping track of time during the sleep state according to a first time format;
▪ wake up the wireless device from the sleep state before, as monitored by the clock, the future point in time;
▪ read broadcasted time information according to a second time format;
▪ obtain System Frame Number, SFN, synchronization based on the broadcasted time information according to the second time format and received System Frame Number, SFN, information.

The receiver 430 is configured to receive, with obtained SFN synchronization, the message at the future point in time.

By way of example, the clock 411 is a low-power clock, and the processing circuit 410 is configured to calibrate the low-power clock based on the broadcasted time information according to the second time format to correct for a drift in the low-power clock.

For example, the clock is a low-power clock for keeping track of time according to a first time format during the sleep state, and the processing circuit 410 is configured to read the broadcasted time information according to a second time format as a representation of absolute time.

In a particular example, the processing circuit 410 is configured to read a first value of the time information according to a second time format before entering the sleep state, and to read a second value of the time information according to a second time format after waking up from the sleep state.

The wireless device may be configured with a DRX cycle longer than a predetermined value according a standard specification of a radio communication system.

As an example, the wireless device is configured with a DRX cycle longer than a SFN range, and the processing circuit 410 is then configured to obtain SFN synchronization although the SFN wraps around based on the combination of two components: one of the components being received System Frame Number, SFN, information and the other component being the broadcasted time information according to the second time format.

In a particular example, the processing circuit 410 is configured to wake up the wireless device from the sleep state when the current time *t* as monitored by the clock is more than *t_{PAGE} - tₛ*, where *t_{PAGE}* is the future point in time indicating an upcoming reception occasion and *tₛ* is a first time period, so that the wireless device wakes up *tₛ* milliseconds before the upcoming reception occasion.

In another example, the processing circuit 410 is configured to calibrate the clock based on the broadcasted time information according to the second time format, and to once again, after calibration of the clock, cause the wireless device to enter the sleep state. Then the processing circuit wakes up the wireless device from the sleep state when the current time *t* as monitored by the clock is more than *t_{PAGE} - t_{SFN},* where *t_{PAGE}* is the future point in time indicating an upcoming reception occasion and *t_{SFN}* is a second time period, so that the wireless device wakes up *t_{SFN}* milliseconds before the upcoming reception occasion, where *tₛ* is greater than or equal to *t_{SFN}.*

By way of example, the processing circuit 410 is configured to read the broadcasted time information according to the second time format in the form of Universal Coordinated Time, UTC, or Global Positioning System, GPS, time.

For example, wireless device is a User Equipment, UE, and the upcoming reception occasion is a future downlink reception event.

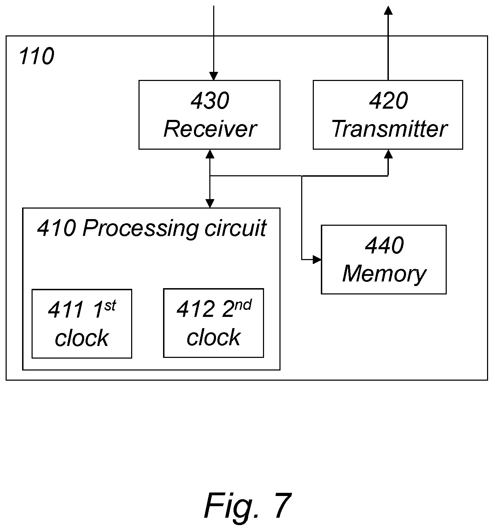

Figure 7 is a schematic block diagram illustrating an exemplifying wireless device according to another embodiment.

With reference to Figure 7, a schematic block diagram of the wireless device 110 is shown. The wireless device 110 is configured to perform the above methods in full or in part. The wireless device 110 is configured to manage resources to be allocated to broadcast data.

The wireless device 110 comprises a processing circuit 410 configured to perform the above methods.

The processing circuit 410 may be a processing unit, a processor, an application specific integrated circuit (ASIC), a field-programmable gate array (FPGA) or the like. As an example, a processor, an ASIC, an FPGA or the like may comprise one or more processor kernels.

The processing circuit 410 comprises a first clock 411, which is operated during sleep state, i.e. a low power state in which power consumption is lower than when the wireless device is in an awake (transmission/reception) state, i.e. an active state in which power consumption is higher than when the wireless device is in sleep state.

Moreover, the processing circuit 410 comprises a second clock 412, which is operated during the awake state, i.e. reception/transmission state.

The wireless device 110 further comprises a transmitter 420, which may be configured to send one or more numbers, values or parameters described herein.

The wireless device 110 further comprises a receiver 430, which may be configured to receive one or more numbers, values or parameters described herein.

The wireless device 110 further comprises a memory 440 for storing software to be executed by, for example, the processing circuit. The software may comprise instructions to enable the processing circuit to perform the method(s) in the wireless device 110 as described above. The memory may be a hard disk, a magnetic storage medium, a portable computer diskette or disc, flash memory, random access memory, RAM, or the like. Furthermore, the memory may be an internal register memory of a processor.

As indicated above, the wireless device may alternatively be defined as a group of function modules, where the function modules are implemented as a computer program running on a processor.

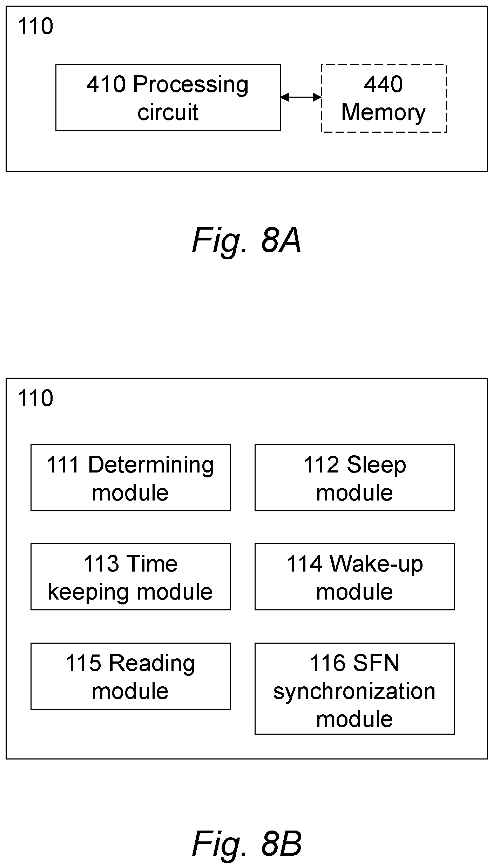

Figure 8A is a schematic block diagram illustrating an example of a wireless device 110 comprising a processing circuit 410 and an associated memory 440.

The computer program residing in memory 440 may thus be organized as appropriate function modules configured to perform, when executed by the processing circuit 410, at least part of the steps and/or tasks described above. An example of such function modules is illustrated in Figure 8B.

Figure 8B is a schematic block diagram illustrating an example of a wireless device comprising a group of function modules. In this example, the wireless device 110 comprises:
▪ a determining module 111 for determining a future point in time indicating an upcoming, future reception occasion at which the wireless device will receive a message;
▪ a sleep module 112 for causing the wireless device to enter the sleep state;
▪ a time keeping module 113 for keeping track of time during the sleep state according to a first time format by using a clock;
▪ a wake-up module 114 for waking-up the wireless device from the sleep state before the future point in time;
▪ a reading module 115 for reading broadcasted time information according to a second time format; and
▪ a System Frame Number, SFN, synchronization module 116 for obtaining SFN synchronization based on the broadcasted time information according to the second time format and received System Frame Number, SFN, information.

As used herein, the terms "number", "value" may be any kind of digit, such as binary, real, imaginary or rational number or the like. Moreover, "number", "value" may be one or more characters, such as a letter or a string of letters. "number", "value" may also be represented by a bit string.

Even though embodiments of the various aspects have been described, many different alterations, modifications and the like thereof will become apparent for those skilled in the art. The described embodiments are therefore not intended to limit the scope of the present disclosure.

### Abbreviations

- 3GPP: 3rd Generation Partnership Project
- eNB: Evolved Node-B
- DRX: Discontinuous Reception
- GSM: Global System for Mobile Communications
- LTE: Long-term Evolution
- M2M: Machine-to-Machine Communications
- MIB: Master Information Block
- MTC: Machine-type Communications
- PF: Paging Frame
- PO: Paging Occasion
- SFN: System Frame Number
- SI: System Information
- SIB: System Information Block
- UE: User Equipment
- UTC: Coordinated Universal Time

## Claims

1. A method performed by a wireless device (110) for managing a sleep state when a Discontinuous Reception, DRX, cycle of the wireless device (110) is configured to be longer than a predefined value, wherein the predefined value refers to a System Frame Number, SFN, range, said method comprising the steps of:
▪ determining (S1) a future point in time indicating an upcoming, future reception occasion at which the wireless device will receive a message, wherein the future point in time lies beyond the SFN range;
▪ entering (S2) said sleep state;
▪ keeping track of time (S3) during said sleep state according to a first time format by using a clock (411) in the wireless communication device; (110)
▪ waking-up (S4) from said sleep state before, as monitored by said clock (411), said future point in time, and monitoring SFNs by receiving SFN information;
▪ reading (S5) broadcasted time information according to a second time format representative of absolute time as reference time;
▪ obtaining (S6) SFN synchronization, although the SFN wraps around, based not only on the received SFN information but also on said broadcasted time information according to said second time format; and
▪ receiving (S7), with obtained SFN synchronization, said message at said future point in time.

2. The method of claim 1, wherein said clock (411) is a low-power clock, and said low-power clock is calibrated based on the broadcasted time information according to said second time format to correct for a drift in the low-power clock.

3. The method of claim 1 or 2, wherein said future point in time is referred to using time information according to said second time format and the SFN of the future reception occasion, and said second time format is representative of absolute time.

4. The method of any of the claims 1 to 3, wherein a first value of said time information according to a second time format is read before entering the sleep state, and a second value of said time information according to a second time format is read after waking up from the sleep state.

5. The method of any of the claims 1 to 4, wherein the predefined value is a predetermined value according a standard specification of a radio communication system.

6. The method of any of the claims 1 to 5, wherein said wireless device (110) wakes up from the sleep state when the current time *t* as monitored by said clock (411) is more than *t_{PAGE}* - *tₛ*, where *t_{PAGE}* is the future point in time indicating an upcoming reception occasion and *tₛ* is a first time period, so that the wireless device wakes up *tₛ* milliseconds before the upcoming reception occasion.

7. The method of claim 6, wherein said clock (411) is calibrated based on the broadcasted time information according to said second time format, and said wireless device (110) once again enters the sleep state, and then wakes up from the sleep state when the current time *t* as monitored by said clock is more than *t_{PAGE}* - *T_{SFN}*, where *t_{PAGE}* is the future point in time indicating an upcoming reception occasion and *T_{SFN}* is a second time period, so that the wireless device wakes up *t_{SFN}* milliseconds before the upcoming reception occasion, where *tₛ* is greater than or equal to *T_{SFN}.*

8. The method of any of the claims 1 to 6, wherein said broadcasted time information according to said second time format is in the form of Universal Coordinated Time, UTC, or Global Positioning System, GPS, time.

9. The method of claim 8, wherein said broadcasted time information according to said second time format is in the form of UTC, and said future point in time is referred to using UTC and SFN.

10. The method of any of the claims 1 to 9, wherein said wireless device (110) is a User Equipment, UE, and said upcoming reception occasion is a future downlink reception event.

11. The method of any of the claims 1 to 10, wherein said future point in time indicating an upcoming, future reception occasion is calculated by said wireless device or obtained in negotiation with a base station or other network node.

12. The method of any of the claims 1 to 11, wherein the wireless device (110) is a User Equipment, UE, and Universal Coordinated Time, UTC, is read from system information and used by the UE to select a wake-up time in the future so that extended long DRX cycles can be used and the UE knows when to wake-up, or the UE negotiates with an eNB to obtain a wake-up time for the UE to wake-up for downlink reception, and the UE wakes up before this selected or negotiated occasion to obtain correct timing synchronization for its low-power clock, and later wakes up again and receives paging information or other downlink transmission at the correct time.

13. A wireless device (110) configured for managing a sleep state when a Discontinuous Reception, DRX, cycle is configured to be longer than a predefined value, wherein the predefined value refers to a System Frame Number, SFN, range, wherein said wireless device (110) comprises:
- a processing circuit (410) configured to:
▪ determine a future point in time indicating an upcoming, future reception occasion at which the wireless device will receive a message, wherein the future point in time lies beyond the SFN range;
▪ cause the wireless device to enter said sleep state;
▪ operate a clock (411) in the wireless communication device (110) keeping track of time during said sleep state according to a first time format;
▪ wake up the wireless device from said sleep state before, as monitored by said clock, said future point in time, and monitor SFNs by receiving SFN information;
▪ read broadcasted time information according to a second time format representative of absolute time as reference time;
▪ obtain SFN synchronization, although the SFN wraps around, based not only on the received SFN information but also on said broadcasted time information according to said second time format; and
- a receiver (430) configured to receive, with obtained SFN synchronization, said message at said future point in time.

14. The wireless device of claim 13, wherein said clock (411) is a low-power clock, and said processing circuit (410) is configured to calibrate said low-power clock based on the broadcasted time information according to said second time format to correct for a drift in the low-power clock.

15. The wireless device of claim 13 or 14, wherein said clock (411) is a low-power clock for keeping track of time according to a first time format during the sleep state, and said processing circuit (410) is configured to read the broadcasted time information according to a second time format as a representation of absolute time.

16. The wireless device of any of the claims 13 to 15, wherein said processing circuit (410) is configured to read a first value of said time information according to a second time format before entering the sleep state, and to read a second value of said time information according to a second time format after waking up from the sleep state.

17. The wireless device of any of the claims 13 to 16, wherein said wireless device (110) is configured with a DRX cycle longer than a predetermined value according a standard specification of a radio communication system.

18. The wireless device of any of the claims 13 to 17, wherein said processing circuit (410) is configured to wake up the wireless device from the sleep state when the current time *t* as monitored by said clock is more than *t_{PAGE} - tₛ*, where *t_{PAGE}* is the future point in time indicating an upcoming reception occasion and *tₛ* is a first time period, so that the wireless device wakes up *tₛ* milliseconds before the upcoming reception occasion.

19. The wireless device of any of the claims 13 to 18, wherein said processing circuit (410) is configured to calibrate said clock based on the broadcasted time information according to said second time format, and to once again, after calibration of said clock, cause the wireless device to enter the sleep state, and then wake up the wireless device from the sleep state when the current time *t* as monitored by said clock is more than *t_{PAGE} - t_{SFN}*, where *t_{PAGE}* is the future point in time indicating an upcoming reception occasion and *t_{SFN}* is a second time period, so that the wireless device wakes up *t_{SFN}* milliseconds before the upcoming reception occasion, where *tₛ* is greater than or equal to *t_{SFN}.*

20. The wireless device of any of the claims 13 to 19, wherein said processing circuit (410) is configured to read said broadcasted time information according to said second time format in the form of Universal Coordinated Time, UTC, or Global Positioning System, GPS, time.

21. The wireless device of any of the claims 13 to 20, wherein said wireless device (110) is a User Equipment, UE, and said upcoming reception occasion is a future downlink reception event.

22. The wireless device of any of the claims 13 to 21, wherein said wireless device (110) comprises a memory (440) for storing executable instructions, which when executed by the processing circuit (410) enables the processing circuit (410) to manage said sleep state.

## Patentansprüche

1. Verfahren zum Verwalten eines Schlafzustandes, das durch ein drahtloses Gerät (110) durchgeführt wird, wenn ein Zyklus des diskontinuierlichen Empfangs, DRX, des drahtlosen Geräts (110) so konfiguriert ist, dass er länger als ein vordefmierter Wert ist, worin der vordefinierte Wert sich auf einen Bereich von Systemrahmennummern, SFN, bezieht, wobei das Verfahren die Schritte umfasst:
▪ Bestimmen (S1) eines zukünftigen Zeitpunkts, der eine bevorstehende, zukünftige Empfangsgelegenheit angibt, bei der das drahtlose Gerät eine Nachricht empfangen wird, worin der zukünftige Zeitpunkt jenseits des SFN-Bereichs liegt;
▪ Eintreten (S2) in den Schlafzustand;
▪ Beobachten der Zeit (S3) während des Schlafzustandes gemäß einem ersten Zeitformat durch Verwenden einer Uhr (411) im drahtlosen Kommunikationsgerät (110);
▪ Aufwachen (S4) aus dem Schlafzustand vor dem zukünftigen Zeitpunkt, wie durch die Uhr (411) überwacht, und Überwachen von SFNs durch Empfangen von SFN-Information;
▪ Lesen (S5) von rundgesendeter Zeitinformation gemäß einem zweiten Zeitformat, das die absolute Zeit darstellt, als Bezugszeit;
▪ Erlangen (S6) der SFN-Synchronisation, obwohl die SFN sich zyklisch wiederholt, und zwar nicht nur auf der Grundlage der empfangenen SFN-Information, sondern auch der rundgesendeten Zeitinformation gemäß dem zweiten Zeitformat; und
▪ mit erlangter SFN-Synchronisation, Empfangen (S7) der Nachricht zu dem zukünftigen Zeitpunkt.

2. Verfahren nach Anspruch 1, worin die Uhr (411) eine stromsparende Uhr ist und die stromsparende Uhr auf der Grundlage der rundgesendeten Zeitinformation gemäß dem zweiten Zeitformat kalibriert wird, um eine Drift der stromsparenden Uhr zu korrigieren.

3. Verfahren nach Anspruch 1 oder 2, worin der zukünftige Zeitpunkt unter Verwendung von Zeitinformation gemäß dem zweiten Zeitformat und der SFN der zukünftigen Empfangsgelegenheit bezeichnet wird und das zweite Zeitformat die absolute Zeit darstellt.

4. Verfahren nach einem der Ansprüche 1 bis 3, worin ein erster Wert der Zeitinformation gemäß einem zweiten Zeitformat vor dem Eintreten in den Schlafzustand gelesen wird und ein zweiter Wert der Zeitinformation gemäß einem zweiten Zeitformat nach dem Aufwachen aus dem Schlafzustand gelesen wird.

5. Verfahren nach einem der Ansprüche 1 bis 4, worin der vordefinierte Wert ein vorbestimmter Wert gemäß einer Norm eines Funkkommunikationssystems ist.

6. Verfahren nach einem der Ansprüche 1 bis 5, worin das drahtlose Gerät (110) aus dem Schlafzustand aufwacht, wenn die aktuelle Zeit *t*, wie durch die Uhr (411) überwacht, mehr als *t_{PAGE}* - *tₛ* beträgt, wobei *t_{PAGE}* der zukünftige Zeitpunkt ist, der eine bevorstehende Empfangsgelegenheit angibt, und *tₛ* eine erste Zeitperiode ist, sodass das drahtlose Gerät *tₛ* Millisekunden vor der bevorstehenden Empfangsgelegenheit aufwacht.

7. Verfahren nach Anspruch 6, worin die Uhr (411) auf der Grundlage der rundgesendeten Zeitinformation gemäß dem zweiten Zeitformat kalibriert wird und das drahtlose Gerät (110) erneut in den Schlafzustand eintritt und dann aus dem Schlafzustand aufwacht, wenn die aktuelle Zeit *t*, wie durch die Uhr (411) überwacht, mehr als *t_{PAGE}* - *t_{SFN}* beträgt, wobei *t_{PAGE}* der zukünftige Zeitpunkt ist, der eine bevorstehende Empfangsgelegenheit angibt, und *t_{SFN}* eine zweite Zeitperiode ist, sodass das drahtlose Gerät *t_{SFN}* Millisekunden vor der bevorstehenden Empfangsgelegenheit aufwacht, wobei *tₛ* größer als oder gleich *t_{SFN}* ist.

8. Verfahren nach einem der Ansprüche 1 bis 6, worin die rundgesendete Zeitinformation gemäß dem zweiten Zeitformat in Form von koordinierter Weltzeit, UTC, oder Zeit des globalen Positionsbestimmungssystems, GPS, vorliegt.

9. Verfahren nach Anspruch 8, worin die rundgesendete Zeitinformation gemäß dem zweiten Zeitformat in Form von UTC vorliegt und der zukünftige Zeitpunkt unter Verwendung von UTC und SFN bezeichnet wird.

10. Verfahren nach einem der Ansprüche 1 bis 9, worin das drahtlose Gerät (110) eine Benutzereinrichtung, UE, ist und die bevorstehende Empfangsgelegenheit ein zukünftiges Abwärtsstreckenempfangsereignis ist.

11. Verfahren nach einem der Ansprüche 1 bis 10, worin der zukünftige Zeitpunkt, der eine bevorstehende, zukünftige Empfangsgelegenheit angibt, durch das drahtlose Gerät berechnet wird oder in Verhandlung mit einer Basisstation oder einem anderen Netzwerkknoten erlangt wird.

12. Verfahren nach einem der Ansprüche 1 bis 11, worin das drahtlose Gerät (110) eine Benutzereinrichtung, UE, ist und koordinierte Weltzeit, UTC, aus Systeminformation gelesen und durch die UE verwendet wird, um eine Aufwachzeit in der Zukunft auszuwählen, sodass DRX-Zyklen von erweiterter Länge verwendet werden können und die UE weiß, wann sie aufwachen muss, oder die UE mit einem eNB verhandelt, um eine Aufwachzeit für die UE zu erlangen, um zum Abwärtsstreckenempfang aufzuwachen, und die UE vor dieser ausgewählten oder ausgehandelten Gelegenheit aufwacht, um korrekte Taktsynchronisation für ihre stromsparende Uhr zu erlangen, und später zur korrekten Zeit wieder aufwacht und Rundrufinformation oder andere Abwärtsstreckeninformation empfängt.

13. Drahtloses Gerät (110), das zum Verwalten eines Schlafzustandes konfiguriert ist, wenn ein Zyklus des diskontinuierlichen Empfangs, DRX, so konfiguriert ist, dass er länger als ein vordefinierter Wert ist, worin der vordefinierte Wert sich auf einen Bereich von Systemrahmennummern, SFN, bezieht, worin das drahtlose Gerät (110) umfasst:
- eine Verarbeitungsschaltung (410), die dafür konfiguriert ist:
▪ einen zukünftigen Zeitpunkt zu bestimmen, der eine bevorstehende, zukünftige Empfangsgelegenheit angibt, bei der das drahtlose Gerät eine Nachricht empfangen wird, worin der zukünftige Zeitpunkt jenseits des SFN-Bereichs liegt;
▪ das drahtlose Gerät zu veranlassen, in den Schlafzustand einzutreten;
▪ eine Uhr (411) in dem drahtlosen Gerät (110) zum Beobachten der Zeit während des Schlafzustandes gemäß einem ersten Zeitformat zu betreiben;
▪ das drahtlose Gerät vor dem zukünftigen Zeitpunkt, wie durch die Uhr überwacht, aus dem Schlafzustand aufzuwecken und SFNs durch Empfangen von SFN-Information zu überwachen;
▪ rundgesendete Zeitinformation gemäß einem zweiten Zeitformat, das die absolute Zeit darstellt, als Bezugszeit zu lesen;
▪ SFN-Synchronisation zu erlangen, obwohl die SFN sich zyklisch wiederholt, und zwar nicht nur auf der Grundlage der empfangenen SFN-Information, sondern auch der rundgesendeten Zeitinformation gemäß dem zweiten Zeitformat; und
- einen Empfänger (430), der dafür konfiguriert ist, mit erlangter SFN-Synchronisation zu dem zukünftigen Zeitpunkt die Nachricht zu empfangen.

14. Drahtloses Gerät nach Anspruch 13, worin die Uhr (411) eine stromsparende Uhr ist und die Verarbeitungsschaltung (410) dafür konfiguriert ist, die stromsparende Uhr auf der Grundlage der rundgesendeten Zeitinformation gemäß dem zweiten Zeitformat zu kalibrieren, um eine Drift der stromsparenden Uhr zu korrigieren.

15. Drahtloses Gerät nach Anspruch 13 oder 14, worin die Uhr (411) eine stromsparende Uhr zum Beobachten der Zeit während des Schlafzustandes gemäß einem ersten Zeitformat ist und die Verarbeitungsschaltung (410) dafür konfiguriert ist, die rundgesendete Zeitinformation gemäß einem zweiten Zeitformat als eine Darstellung der absoluten Zeit zu lesen.

16. Drahtloses Gerät nach einem der Ansprüche 13 bis 15, worin die Verarbeitungsschaltung (410) dafür konfiguriert ist, vor dem Eintreten in den Schlafzustand einen ersten Wert der Zeitinformation gemäß einem zweiten Zeitformat zu lesen und nach dem Aufwachen aus dem Schlafzustand einen zweiten Wert der Zeitinformation gemäß einem zweiten Zeitformat zu lesen.

17. Drahtloses Gerät nach einem der Ansprüche 13 bis 16, worin das drahtlose Gerät (110) mit einem DRX-Zyklus konfiguriert ist, der länger als ein vorbestimmter Wert gemäß einer Norm eines Funkkommunikationssystems ist.

18. Drahtloses Gerät nach einem der Ansprüche 13 bis 17, worin die Verarbeitungsschaltung (410) dafür konfiguriert ist, das drahtlose Gerät aus dem Schlafzustand aufzuwecken, wenn die aktuelle Zeit *t*, wie durch die Uhr überwacht, mehr als *t_{PAGE} - tₛ* beträgt, wobei *t_{PAGE}* der zukünftige Zeitpunkt ist, der eine bevorstehende Empfangsgelegenheit angibt, und *tₛ* eine erste Zeitperiode ist, sodass das drahtlose Gerät *tₛ* Millisekunden vor der bevorstehenden Empfangsgelegenheit aufwacht.

19. Drahtloses Gerät nach einem der Ansprüche 13 bis 18, worin die Verarbeitungsschaltung (410) dafür konfiguriert ist, die Uhr auf der Grundlage der rundgesendeten Zeitinformation gemäß dem zweiten Zeitformat zu kalibrieren und das drahtlose Gerät nach der Kalibrierung der Uhr erneut dazu veranlassen, in den Schlafzustand einzutreten, und dann das drahtlose Gerät aus dem Schlafzustand aufzuwecken, wenn die aktuelle Zeit *t,* wie durch die Uhr überwacht, mehr als *t_{PAGE}* - *t_{SFN}* beträgt, wobei *t_{PAGE}* der zukünftige Zeitpunkt ist, der eine bevorstehende Empfangsgelegenheit angibt, und *t_{SFN}* eine zweite Zeitperiode ist, sodass das drahtlose Gerät *t_{SFN}* Millisekunden vor der bevorstehenden Empfangsgelegenheit aufwacht, wobei *tₛ* größer als oder gleich *t_{SFN}* ist.

20. Drahtloses Gerät nach einem der Ansprüche 13 bis 19, worin die Verarbeitungsschaltung (410) dafür konfiguriert ist, die rundgesendete Zeitinformation gemäß dem zweiten Zeitformat in Form von koordinierter Weltzeit, UTC, oder Zeit des globalen Positionsbestimmungssystems, GPS, zu lesen.

21. Drahtloses Gerät nach einem der Ansprüche 13 bis 20, worin das drahtlose Gerät (110) eine Benutzereinrichtung, UE, ist und die bevorstehende Empfangsgelegenheit ein zukünftiges Abwärtsstreckenempfangsereignis ist.

22. Drahtloses Gerät nach einem der Ansprüche 13 bis 21, worin das drahtlose Gerät (110) einen Speicher (440) zum Speichern ausführbarer Anweisungen umfasst, die, wenn sie durch die Verarbeitungsschaltung (410) ausgeführt werden, die Verarbeitungsschaltung (410) befähigen, den Schlafzustand zu verwalten.

## Revendications

1. Procédé mis en oeuvre par un dispositif sans fil (110) pour gérer un état de veille lorsqu'un cycle de réception discontinue, DRX, du dispositif sans fil (110) est configuré de manière à être plus long qu'une valeur prédéfinie, dans lequel la valeur prédéfinie fait référence à une plage de numéros de trame de système, SFN, ledit procédé comprenant les étapes ci-dessous consistant à :
▪ déterminer (S1) un instant futur indiquant une occasion de réception future à venir au cours de laquelle le dispositif sans fil recevra un message, dans lequel l'instant futur se situe au-delà de la plage de numéros SFN ;
▪ entrer (S2) dans ledit état de veille ;
▪ assurer un repérage temporel (S3) au cours dudit état de veille selon un premier format de temps en utilisant une horloge (411) dans le dispositif de communication sans fil (110) ;
▪ se réveiller (S4) en sortant dudit état de veille avant, tel que surveillé par ladite horloge (411), ledit instant futur, et surveiller des numéros SFN en recevant des informations de numéros SFN ;
▪ lire (S5) des informations de temps diffusées selon un second format de temps représentatif du temps absolu en tant que temps de référence ;
▪ obtenir (S6) une synchronisation de numéros SFN, bien que le numéro SFN se répète cycliquement, non seulement sur la base des informations de numéros SFN reçues, mais aussi sur la base desdites informations de temps diffusées selon ledit second format de temps ; et
▪ recevoir (S7), avec une synchronisation de numéros SFN obtenue, ledit message, audit instant futur.

2. Procédé selon la revendication 1, dans lequel ladite horloge (411) est une horloge de faible puissance, et ladite horloge de faible puissance est calibrée sur la base des informations de temps diffusées selon ledit second format de temps pour corriger une dérive dans l'horloge de faible puissance.

3. Procédé selon la revendication 1 ou 2, dans lequel il est fait référence audit instant futur en utilisant des informations de temps selon ledit second format de temps et le numéro SFN de l'occasion de réception future, et ledit second format de temps est représentatif du temps absolu.

4. Procédé selon l'une quelconque des revendications 1 à 3, dans lequel une première valeur desdites informations de temps selon un second format de temps est lue avant d'entrer dans l'état de veille, et une seconde valeur desdites informations de temps selon un second format de temps est lue à l'issue du réveil de l'état de veille.

5. Procédé selon l'une quelconque des revendications 1 à 4, dans lequel la valeur prédéfinie est une valeur prédéterminée selon une spécification standard d'un système de radiocommunication.

6. Procédé selon l'une quelconque des revendications 1 à 5, dans lequel ledit dispositif sans fil (110) se réveille de l'état de veille lorsque l'instant en cours *t*, tel que surveillé par ladite horloge (411), est supérieur à *t_{PAGE}* - *tₛ,* où *t_{PAGE}* est l'instant futur indiquant une occasion de réception à venir et *tₛ* est une première période de temps, de sorte que le dispositif sans fil se réveille *tₛ* millisecondes avant l'occasion de réception à venir.

7. Procédé selon la revendication 6, dans lequel ladite horloge (411) est calibrée sur la base des informations de temps diffusées selon ledit second format de temps, et dans lequel ledit dispositif sans fil (110) entre une fois de plus dans l'état de veille, puis se réveille de l'état de veille lorsque l'instant en cours *t*, tel que surveillé par ladite horloge, est supérieur à *t_{PAGE}* - *t_{SFN},* où *t_{PAGE}* est l'instant futur indiquant une occasion de réception à venir, et *t_{SFN}* est une seconde période de temps, de sorte que le dispositif sans fil se réveille *t_{SFN}* millisecondes avant l'occasion de réception à venir, où *tₛ* est supérieur ou égal à *t_{SFN}.*

8. Procédé selon l'une quelconque des revendications 1 à 6, dans lequel lesdites informations de temps diffusées selon ledit second format de temps sont sous la forme du temps universel coordonné, UTC, ou du temps de système mondial de localisation, GPS.

9. Procédé selon la revendication 8, dans lequel lesdites informations de temps diffusées selon ledit second format de temps sont sous la forme du temps UTC, et il est fait référence audit instant futur en utilisant le temps UTC et le numéro SFN.

10. Procédé selon l'une quelconque des revendications 1 à 9, dans lequel ledit dispositif sans fil (110) est un équipement d'utilisateur, UE, et ladite occasion de réception à venir est un événement de réception en liaison descendante futur.

11. Procédé selon l'une quelconque des revendications 1 à 10, dans lequel ledit instant futur indiquant une occasion de réception future à venir est calculé par ledit dispositif sans fil, ou obtenu dans le cadre d'une négociation avec une station de base ou un autre noeud de réseau.

12. Procédé selon l'une quelconque des revendications 1 à 11, dans lequel le dispositif sans fil (110) est un équipement d'utilisateur, UE, et le temps universel coordonné, UTC, est lu à partir d'informations de système, et est utilisé par l'équipement UE pour sélectionner un temps de réveil dans le futur, de sorte que des cycles de réception DRX longs étendus peuvent être utilisés, et l'équipement UE sait à quel moment il doit se réveiller, ou l'équipement UE négocie avec une station « eNB » pour obtenir un temps de réveil de l'équipement UE en vue d'une réception en liaison descendante, et l'équipement UE se réveille avant cette occasion sélectionnée ou négociée en vue d'obtenir une synchronisation de temporisation correcte pour son horloge de faible puissance, et se réveille à nouveau ultérieurement et reçoit des informations de radiomessagerie ou une autre transmission en liaison descendante à l'instant correct.

13. Dispositif sans fil (110) configuré de manière à gérer un état de veille lorsqu'un cycle de réception discontinue, DRX, est configuré de manière à être plus long qu'une valeur prédéfinie, dans lequel la valeur prédéfinie fait référence à une plage de numéros de trame de système, SFN, dans lequel ledit dispositif sans fil (110) comprend :
- un circuit de traitement (410) configuré de manière à :
▪ déterminer un instant futur indiquant une occasion de réception future à venir au cours de laquelle le dispositif sans fil recevra un message, dans lequel l'instant futur se situe au-delà de la plage de numéros SFN ;
▪ amener le dispositif sans fil à entrer dans ledit état de veille ;
▪ exploiter une horloge (411) dans le dispositif de communication sans fil (110) pour assurer un repérage temporel au cours dudit état de veille selon un premier format de temps ;
▪ réveiller le dispositif sans fil dudit état de veille avant, tel que surveillé par ladite horloge, ledit instant futur, et surveiller des numéros SFN en recevant des informations de numéros SFN ;
▪ lire des informations de temps diffusées selon un second format de temps représentatif du temps absolu en tant que temps de référence ;
▪ obtenir une synchronisation de numéros SFN, bien que le numéro SFN se répète cycliquement, non seulement sur la base des informations de numéros SFN reçues, mais aussi sur la base desdites informations de temps diffusées selon ledit second format de temps ; et
- un récepteur (430) configuré de manière à recevoir, avec une synchronisation de numéros SFN obtenue, ledit message, audit instant futur.

14. Dispositif sans fil selon la revendication 13, dans lequel ladite horloge (411) est une horloge de faible puissance, et ledit circuit de traitement (410) est configuré de manière à calibrer ladite horloge de faible puissance sur la base des informations de temps diffusées selon ledit second format de temps en vue de corriger une dérive dans l'horloge de faible puissance.

15. Dispositif sans fil selon la revendication 13 ou 14, dans lequel ladite horloge (411) est une horloge de faible puissance pour assurer un repérage temporel selon un premier format de temps au cours de l'état de veille, et ledit circuit de traitement (410) est configuré de manière à lire les informations de temps diffusées selon un second format de temps en tant qu'une représentation du temps absolu.

16. Dispositif sans fil selon l'une quelconque des revendications 13 à 15, dans lequel ledit circuit de traitement (410) est configuré de manière à lire une première valeur desdites informations de temps selon un second format de temps avant d'entrer dans l'état de veille, et à lire une seconde valeur desdites informations de temps selon un second format de temps à l'issue du réveil de l'état de veille.

17. Dispositif sans fil selon l'une quelconque des revendications 13 à 16, dans lequel ledit dispositif sans fil (110) est configuré avec un cycle de réception DRX plus long qu'une valeur prédéterminée selon une spécification standard d'un système de radiocommunication.

18. Dispositif sans fil selon l'une quelconque des revendications 13 à 17, dans lequel ledit circuit de traitement (410) est configuré de manière à réveiller le dispositif sans fil de l'état de veille lorsque l'instant en cours *t*, tel que surveillé par ladite horloge, est supérieur à *t_{PAGE}* - *tₛ,* où *t_{PAGE}* est l'instant futur indiquant une occasion de réception à venir et *tₛ* est une première période de temps, de sorte que le dispositif sans fil se réveille *tₛ* millisecondes avant l'occasion de réception à venir.

19. Dispositif sans fil selon l'une quelconque des revendications 13 à 18, dans lequel ledit circuit de traitement (410) est configuré de manière à calibrer ladite horloge sur la base des informations de temps diffusées selon ledit second format de temps, et, une fois de plus, suite au calibrage de ladite horloge, à amener le dispositif sans fil à entrer dans l'état de veille, et à réveiller ensuite le dispositif sans fil de l'état de veille lorsque l'instant en cours *t,* tel que surveillé par ladite horloge, est supérieur à *t_{PAGE}* - *t_{SFN},* où *t_{PAGE}* est l'instant futur indiquant une occasion de réception à venir, et *t_{SFN}* est une seconde période de temps, de sorte que le dispositif sans fil se réveille *t_{SFN}* millisecondes avant l'occasion de réception à venir, où *tₛ* est supérieur ou égal à *t_{SFN}.*

20. Dispositif sans fil selon l'une quelconque des revendications 13 à 19, dans lequel ledit circuit de traitement (410) est configuré de manière à lire lesdites informations de temps diffusées selon ledit second format de temps sous la forme du temps universel coordonné, UTC ou du temps de système mondial de localisation, GPS.

21. Dispositif sans fil selon l'une quelconque des revendications 13 à 20, dans lequel ledit dispositif sans fil (110) est un équipement d'utilisateur, UE, et ladite occasion de réception à venir est un événement de réception en liaison descendante futur.

22. Dispositif sans fil selon l'une quelconque des revendications 13 à 21, dans lequel ledit dispositif sans fil (110) comprend une mémoire (440) pour stocker des instructions exécutables, qui, lorsqu'elles sont exécutées par le circuit de traitement (410), permettent au circuit de traitement (410) de gérer ledit état de veille.
